# EUROPEAN PATENT SPECIFICATION

(11) **EP 1 419 934 B1**
(45) Date of publication and mention of the grant of the patent: **26.07.2006**
(21) Application number: 03256264.7
(22) Date of filing: 03.10.2003
(51) Int. Cl.: B60R 1/072

(54) **Adjustment device of electric power mirrors**
Verstelleinrichtung der elektrischen Rückblickspiegel
Dispositif de réglage des rétroviseurs électrique

(30) Priority: 13.11.2002 JP 2002329098
(43) Date of publication of application: 19.05.2004
(73) Proprietor: Murakami Corporation, Shizuoka-shi, Shizuoka (JP)
(72) Inventor: Fukai, Akira, Fujieda-Shi Shizuoka (JP)
(74) Representative: Sutcliffe, Nicholas Robert

(56) References cited:
- EP-A- 0 059 073
- EP-A- 0 528 418

## Description

This invention relates to an adjustment device used in electric power mirrors, especially, an adjustment device that has a mechanism by which the mirror can be securely reassembled in exchanging services without reassembly problems.

The conventional side mirrors installed in the right and left sides of automobiles for the safety driving assistance are equipped with electric power system that enables adjustment of the mirror angle by means of a remote control system for the purpose of allowing the drivers sitting in the automobile cabins (referring to Published Utility Model Application: JP, 05-27304, Y (1993) as an example) to obtain good view angles.

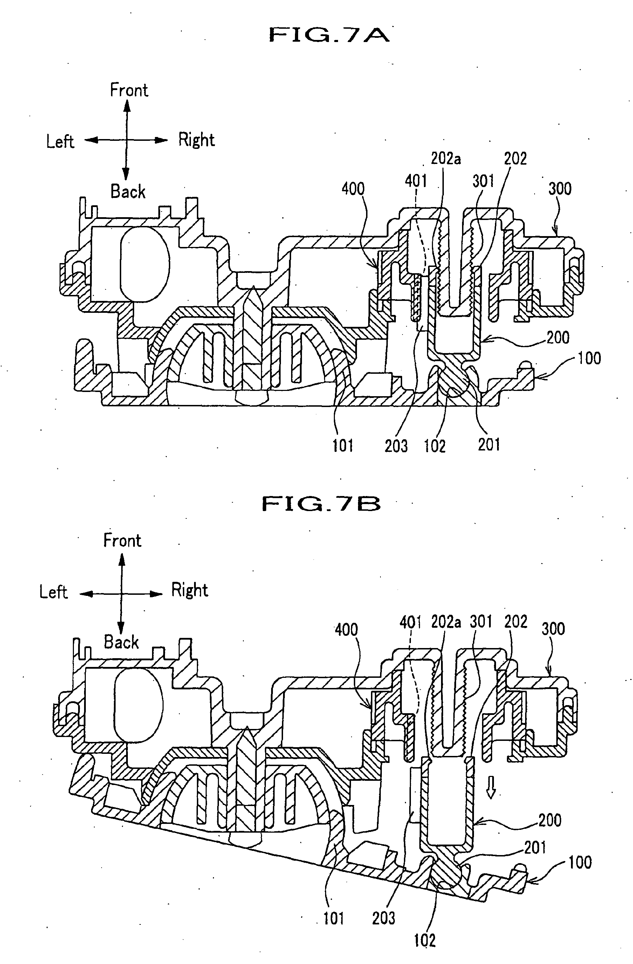

The adjustment device of electric power mirror (abbreviated as an "adjustment device", hereinafter) has conventionally a mechanism shown in the figure 7A as a mirror holder 100 to hold a mirror (which is not drawn in the figures) can be tilted around the center of a semi-globe to which inner surface of a salient 101 formed in the holder 100 smoothly contacts and two adjustment nuts 200 (only one adjustment nut is drawn in the figures) of the mechanisms enable the mirror angle to be adjusted about the vertical axis and the horizontal axis perpendicular to the front or the back direction of the automobile. More concretely, this mirror holder 100 can be tilted by means of the adjustment nuts 200 (one of the adjustment nuts is shown in FIG. 7A) installed in two positions in the mirror holder 100 so that the adjustment nuts can adjust the orientation of the mirror relative to the driving direction of the automobiles.

The adjustment nut has a globe-like pivot 201 formed in an end thereof and the globe pivot fits to a recess 102 which has inner-globe shape to hold the pivot 201. The other end of the adjustment nut 200 is formed into a plurality of legs 202 which are elastically deformable and of which tips have projections 202a fitting onto the surface of the screw portion 301 of an external thread made in the actuator housing 300. A rib 203, formed on the outer surface of the adjustment nut 200, is fitted into a trench 401 made in a worm wheel 400 and can slide therein along the trench but cannot rotate without obstruction against the worm wheel, in other words the adjustment nut cannot relatively rotate against the rotation of worm wheel. Therefore the adjustment nut 200 can screw-in or screw-out in the direction of the rotation axis of the worm wheel 400 in accordance with the rotation of the worm wheel.

In this conventional construction of the adjustment device, the combining force between the projection 202a and the screw potion 301 is created by the elastic deformation of the legs 202 formed at an end of adjustment nut 200. However the combining force between the pivot 201 and the recess 102 that holds the pivot is stronger than the above combining force between the projection 202a and the screw potion 301. Therefore, when the mirror is dismounted from the mirror holder 100 in the service of mirror exchange, the adjustment nut 200 which is pulled by the mirror holder 100 tends to be put out of the screw-in position with the screw portion 301 once the mirror holder 100 is strongly pulled down in conjunction with pulling of the mirror attached to the mirror holder.

Once the adjustment nut 200 is pulled off from the screw potion 301 made in the actuator housing 300, it is necessary to disassemble the actuator housing 300 in order to put the adjustment nuts back in the screw-in position with the screw portion. Therefore, there is a problem that the mirror exchange service needs more time-consuming work than a simple process of exchanging parts.

It may be possible to push the adjustment nut 200 into the screw-in position of the screw portion 301 of the actuator housing 300 by means of a strong insertion force. However, the projection 202a may be broken due to such strong insertion force. For this insertion of the adjustment nut, it is necessary to position the rib 203 so that it is aligned and fitted into the trench 401 made in the worm wheel 400. This is difficult hand work. Therefore the work needs high skill in such assembly. In addition, a rubber boot (not shown in FIG. 7A or FIG. B) that covers the surrounding portion of the adjustment nut 200 can block the sight to check the correct positioning of the rib 203 fitted into the trench 401. Therefore the reassembly work itself is difficult.

A purpose of the present invention is to offer an adjustment device that has a preventive mechanism by which the projection 202a in the adjustment device cannot be pulled off from the screw portion of the actuator housing even when the mirror holder is strongly pulled down during a mirror exchange service.

EP-A-0 059 073 discloses a mirror actuator unit corresponding to the pre-characterising portion of claim 1. EP-A-0 528 418 discloses an electrically controlled mirror assembly having a number of mirror driving mechanisms.

### SUMMARY OF INVENTION

The present invention provides an adjustment device defined by the features of claim 1 that comprises a worm wheel rotated by an actuator, the worm wheel having a rotation axis, an adjustment nut that can slide along the direction of the rotational axis but cannot relatively rotate against the rotation of worm wheel, and an actuator housing that has a screw portion, the adjustment nut being assembled therewith so as to be movable in the direction of the screw axis of the screw portion, wherein, the adjustment nut has a salient extending outwardly from the outer surface of the adjustment nut, the worm wheel has a stopper portion facing a surface of the adjustment nut and both the adjustment nut and the worm wheel are arranged such that the salient and the stopper portion are abutable so as to prevent the adjustment nut from sliding further or being pulled off from the screw portion of the actuator housing.

The salient made on the surface of the adjustment nut can be stopped by the stopper portion made in the worm wheel even when the mirror holder is strongly pulled in a mirror exchanging service so that the adjustment nut is pulled to the orientation of being pulled off from the screw portion. In other words, the adjustment nut is not pulled off from the screw portion by the abutment of the salient and the stopper portion, which results in securely preventing the adjustment nuts from being pulled from the screw portion of the actuator housing.

Preferably the screw portion is formed on the outer surface of a column formed in the actuator housing, and the adjustment nut has an inwardly extending projection which fits to the screw portion, wherein the salient may be formed on the outer surface of the adjustment nut and the stopper portion extends inwardly from an inner surface of the worm wheel.

Accordingly, in situations where the adjustment nut could be pulled off from the screw portion of the column formed in the actuator, it abuts the worm wheel at the salient and the projection of the adjustment nut does not slide on the screw surface of the screw portion of the column because the diameter of the adjustment nut cannot be elastically enlarged due to the presence of the worm wheel. Therefore the movement of the adjustment nut is regulated by the salient and the screw surface. Since the form of the salient is independently determined, it is possible to design the shape of the salient to ensure that the adjustment nut is prevented from being pulled off from the worm wheel.

Preferably the salient and the stopper portion form an abutment interface which lies on a cone surface that forms an acute angle to the plane normal to a rotation axis of the adjustment nut.

Accordingly, as the interface at which the salient and the stopper portion abut lies on a cone surface, the resistance force against the pulling off of the adjustment nut is a composite of the direct resistance against the pulling off force and the pushing force towards the worm wheel or the screw portion made on the column formed in the actuator housing. Therefore the salient and the stopper portion or the projection and the screw portion of the column are more firmly pressed against each other. Accordingly it is possible to more securely prevent the adjustment nut from being pulled off from the worm wheel.

### BRIEF DESCRIPTION OF THE DRAWINGS

FIG. 1 is a schematic that shows a perspective view of the disassembly of a side mirror assembly SM installed in an automobile to which the adjustment device according to the present invention is applied.
FIG. 2 is a schematic that shows a perspective view of the disassembly of the adjustment device according to an embodiment of the present invention.
FIG. 3 is a schematic that shows a perspective view of the detailed construction of the adjustment nut and the worm wheel of FIG. 2.
FIG. 4 is a schematic that shows the details of the abutment interface of the salient formed on the adjustment nut and the stopper portion formed in the worm wheel.
FIG. 5A and FIG. 5B are schematics that show the cross-sectional views of the adjustment nut and the worm wheel in a mirror exchanging service.
FIG. 6 is a schematic that shows abutment of the salient and the stopper portion in another embodiment of the present invention.
Fig. 7A and Fig. 7B are schematics that show the cross sectional views of the conventional adjustment device in a mirror exchanging service.

Embodiments of the adjustment device according to this invention will be explained in referring to the drawings.

### First embodiment

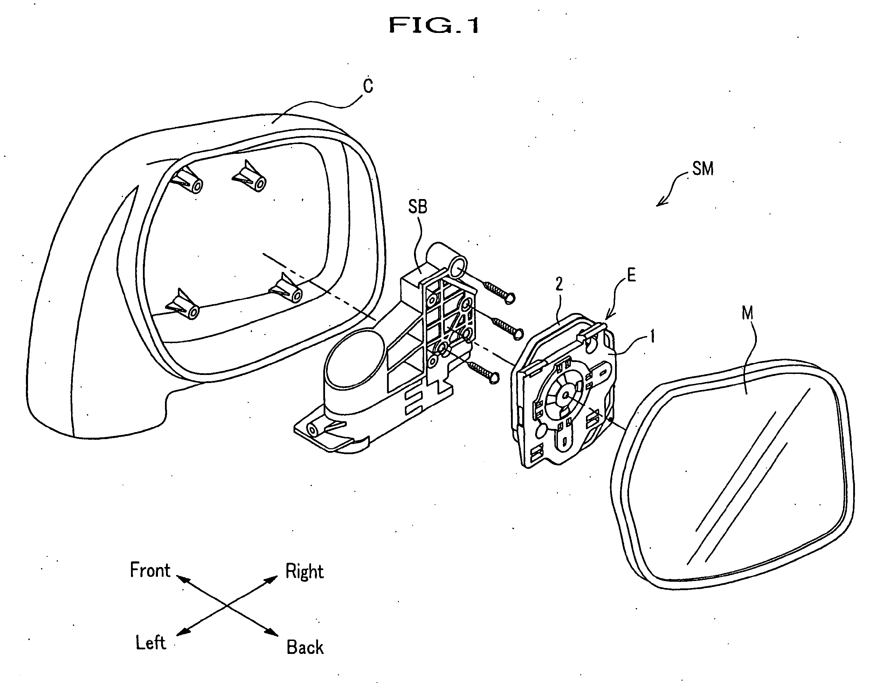

As shown in FIG. 1, the assembly of a side mirror installed in an automobile comprises a mirror M and an outer casing unit C which holds a supporting base SB and an adjustment device E. The adjustment device E comprises a mirror holder 1 that holds the mirror and an actuator housing (a motor housing) 2. The arrows show the directions of front, back, right and left which are defined in reference to the normal driving direction of the automobile when the side mirror is installed in the automobile.

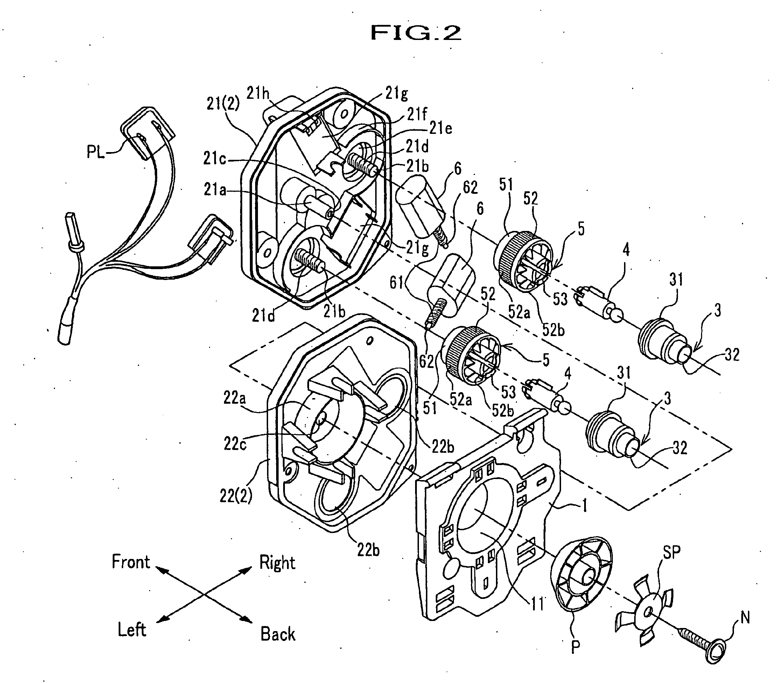

As shown in FIG. 2, a mirror holder 1 is formed, using a sheet of plate, into a portion of a hemi-sphere that has a center of movement and supports the adjustment of the mirror angle direction relative to the automobile driving direction. The actuator 2 is constructed with a front housing 21 and the rear housing 22 and rubber boots 3, adjustment nuts 4, worm wheels 5 and two actuators 6 (two motors) are built therein.

The front housing 21 has a supporting pipe 21a of which the end works as the center of adjustment of the mirror angle direction and the mirror angle changing support 11 and two columns 21b at the right side and the lower side of the supporting pipe 21a. A screw surface 21c is formed inside the open end portion of the supporting pipe 21a in the form of an internal thread. A bolt N, the screw surface of which fits to the screw surface 21c of the supporting pipe 21a, is used to fix the mirror holder 1 to the front housing 21. Other screw surfaces 21d are formed on the outer surfaces of the columns 21b in a form of external threads so that each adjustment nut 4 can fit to the screw surface 21d. A recess 21e is formed to support each worm wheel 5 without obstructing its rotation and a rib 21f to prevent the scattering of grease is formed as well. A motor mounting potion 21g is formed adjacent to the recess 21e and the rib 21f for setting the motor 6 in.

The rear housing 22 has a recessed supporting portion 22a which has a shape of a part of the inner surface of a hemi-sphere, by which the mirror holder 1 is movable at the mirror angle changing support 11. Circular holes 22b to which flange portions 31 of rubber boots 3 are adhesively bound are formed in the right-hand side and lower side of the recessed supporting portion 22a. In the bottom side of the supporting portion 22a, a circular hole 22c is made so that the supporting pipe 21a can be inserted therethrough. The supporting portion 22a is contacted with the mirror angle changing support 11 of the mirror holder 1 and a spring SP and pressing part P which has a shape of part of a hemi-sphere are attached to the supporting pipe 21a which extends from the circular hole 22c. A bolt N is screwed into the internal thread 21c and the mirror holder 1 is installed into the actuator 2 so as to have changeable directional functionality.

The rubber boot 3 is to prevent the water from getting into the actuator 2 and is made of expandable elastic rubber. The flange portion 31 at an end portion thereof has a double flange construction and the peripheral portion of the circular hole 22b is sandwiched by the two flanges so that the water is sealed off and water invasion is prevented. The other end of the rubber boot 3 is contacted with the mirror holder 1.

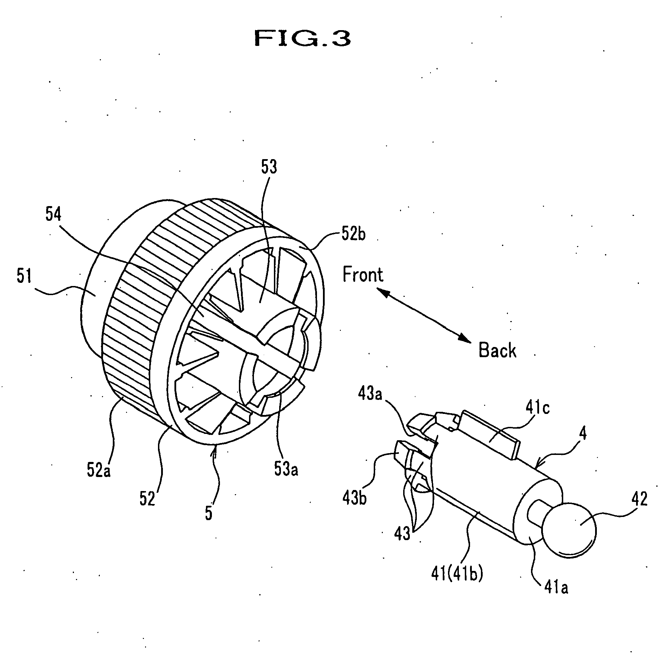

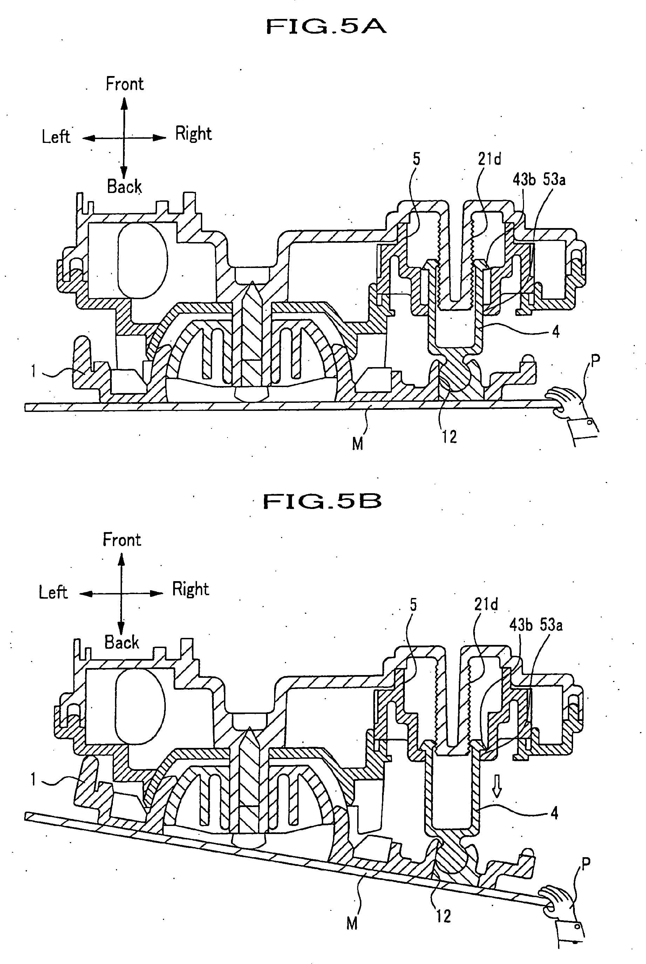

The adjustment nut 4, as shown in FIG. 3, comprises a cylindrical main body 41, a globe-like pivot 42 which is formed at a bottom of the cylindrical main body 41 and is fitted into the recess 12 of the mirror holder 1 (see FIG. 5) and five leg portions 43 (four of which are shown in FIG. 3). On the outer surface 41b of the main body 41, a rib 41c that extends outwardly is formed in an appropriate position. At the tip of the leg portion 43, a projection 43a which fits onto the screw surface 21d is formed in the inner surface and a salient 43b is formed on the outer surface.

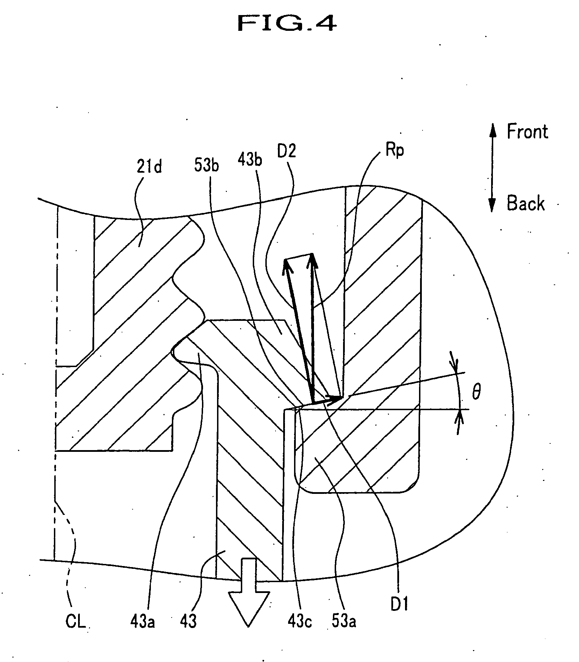

The salient 43b provides, as shown in FIG. 4, an abutment surface 43c, which forms the interface at which the salient and the stopper portion abut, and has an acute angle relative to the plane normal to the rotation axis CL of the adjustment nut 4. The abutment interface lies on a cone surface of which the vertex is at the side of the pivot 42 relative to the normal plane to the axis CL at the abutment interface position.

As shown in FIG. 2, the worm wheel 5 comprises a sliding portion 51 which has a shape of a cylinder that slides in the recess 21e made in the front housing 21, and a cylindrical main body 52. On the outer surface of the main body 52, a gear portion 52a that fits to the screw portion 61 of the motor 6 is formed in the front part of the worm wheel and ribs 53 which project to the inside of the worm wheel are formed in the rear part thereof. As shown in FIG. 3, four slits 54 are formed in a manner such that the rib 53 is segregated into four pieces. The slits 54 are made through the rib 53 in the back and forth direction (along the rotation axis of the worm wheel). By the fitting of the rib 41c of the adjustment nut to the slit 54, the adjustment nut 4 can move along the front and back direction but cannot rotate against the rotation of the worm wheel.

Moreover, the rib 53 which is segregated into four pieces has a stopper portion 53a at an end thereof. As shown in FIG. 4, the stopper portion 53a is formed in such a shape that an abutment surface 53b can contact the other abutment surface 43c of the salient 43b of the adjustment nut 4. In other words, the abutment surface 53b lies on the cone which is convex to pivot side of the adjustment nut. The angle shown in FIG. 4 is an acute angle.

As shown in FIG. 2, the rotor rod 62 of the motor 6 is formed into a worm gear 61 to rotate the worm wheel 5. The electric power is supplied to the motor 6 by a plug PL inserted through the hole 21h which is made in the motor installation bed 21g in the front housing 21.

The effect of the adjustment device E in exchanging the mirror M of the side mirror SM during a mirror exchanging service will be explained in detail. As shown in FIG. 5A, when an operator P tries to take the mirror M by holding at the right end of the mirror M, the adjustment nut 4 is pulled to a large extent in the back direction as shown in FIG. 5B. Then the salient 43b abuts the stopper portion 53b of the worm wheel 5 and the adjustment nut is restricted from being pulled off the worm wheel. In other words, the adjustment nut is stopped by the abutment of the salient 43b and the stopper portion 53a in a manner such that the adjustment nut is not pulled off from the external thread of screw portion 21d.

Also as shown in FIG. 4, the abutment surface 43c of the salient 43b and the abutment surface 53b of the stopper portion 53a are not normal to the pulling force direction, drag RP is resolved into a small component force D1 along the abutment surfaces 43c and 53b and a large component force D2 normal to the abutment surfaces 43c and 53b. Since the component force D2 is angled towards the screw portion 21d, the salient 43b is pushed towards the screw portion 21d to some extent and then the seizure force between the salient 43b and the screw portion 21d becomes stronger.

In the above preferred embodiment, the following effect is obtained. Once the adjustment nut 4 moves in such a way as to be pulled off from the worm wheel, the salient 43b abuts the stopper portion 53a of the worm wheel 5 and stops to moving, therefore the adjustment nut 4 is securely prevented from being pulled off from the screw portion 21d of the worm wheel. The projection 43a and the salient portion 43b of the adjustment nut 4 fit to the screw portion 21d and abut the stopper portion, respectively, and therefore, the movement of the adjustment nut in such a way as to be pulled off from the worm wheel is restricted so that it can be ensured that the adjustment nut 4 is not pulled off from the worm wheel 5. In addition, as the abutment surfaces 43c and 53b between the salient 43b and the stopper portion 53a are not normal to the pulling force direction, the seizure force between the nail portion 43a and the screw portion 21d is made stronger and therefore the adjustment nut 4 is further prevented from being pulled off from the worm wheel 5.

### Second embodiment

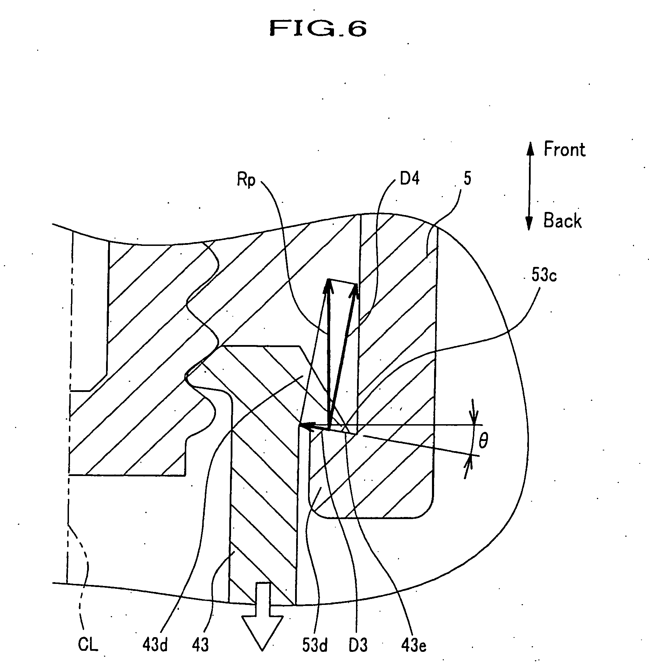

The present invention is not restricted to the first embodiment but can be applied to other embodiments. In the first embodiment the abutment surfaces 43c and 53c form an interface which lies on the surface of the cone that is convex to the side of the pivot 42 of the adjustment nut 4. A second embodiment is as shown in Fig. 6, for example, wherein the abutment surfaces form an interface which lies on the surface of a cone that is convex to the end side where the leg portions 43 are formed in the adjustment nut 4. In this case the drag force is resolved into a small component force D3 along the abutment surfaces 43e and 53c and a large component force D4 normal to the abutment surfaces 43e and 53c. Since the large component force D4 is angled towards the worm wheel, the salient 43d is pushed towards the worm wheel 5. Thus the combination force between the salient 43d and the stopper portion 53d increases and the adjustment nut 4 is further prevented from being pulled off from the worm wheel.

In both these embodiments, the adjustment device E is applied to a side mirror (or a door mirror), however this invention can be applied to other outside mirrors such as a fender mirror or a rear under mirror installed to the upper portion of a hatchback door or to inside mirrors, for example, a mirror installed at the front ceiling close to the driver seat.

According to the present invention, since the salient formed in the adjustment nut can abut the stopper portion formed in the worm wheel, the adjustment nut can be prevented from being pulled off from the worm wheel.

Preferably the adjustment nut has a projection and a salient formed to the other side of the projection. Therefore, the adjustment nut can be prevented from being pulled off from the worm wheel not only by the stopper portion but also by the thread contact between the screw portion and the projections.

Preferably the salient and the stopper portion form an abutment interface which lies on a conical surface, whereby the seizure force between the projection and the screw portion or a combination force between the salient and the stopper portion 53d can be increased, and the adjustment nut is further prevented from being pulled off from the worm wheel.

## Claims

1. An adjustment device used for electric power mirrors comprising:
a worm wheel (5) rotated by an actuator (6), the worm wheel having a rotational axis,
an adjustment nut (4),
an actuator housing (2), and
a screw portion (21d), said adjustment nut being assembled therewith so as to be movable in the direction of the screw axis (CL) of said screw portion, wherein;
said adjustment nut has a salient (43b) extending outwardly from the outer surface thereof,
a stopper portion (53a) faces a surface of said adjustment nut, and both said adjustment nut and said worm wheel are arranged such that said salient and said stopper portion are abuttable so as to prevent said adjustment nut from further sliding along said screw portion or being pulled off from said screw portion;
**characterised in that:**
the adjustment nut (4) can slide along the direction of said rotational axis but cannot relatively rotate against rotation of said worm wheel (5),
the screw portion (21d) is formed on the actuator housing (2), and
the stopper portion (53a) is formed on the worm wheel (5).

2. An adjustment device used for electric power mirrors according to Claim 1, wherein;
said screw portion is formed on the outer surface of a column (21b) formed on said actuator housing,
the adjustment nut has an inwardly extending projection (43a) which fits to said screw portion, and
said stopper portion extends inwardly from an inside surface of said worm wheel.

3. An adjustment device used for electric power mirrors according to Claim 2, wherein,
said salient and said stopper portion form an abutment interface which lies on a part of surface of a cone that forms an acute angle to a plane normal to the rotation axis of said adjustment nut.

## Patentansprüche

1. Für elektrisch betriebene Spiegel verwendete Einstellungsvorrichtung, umfassend:
ein von einem Aktuator (6) gedrehtes Schneckenrad (5), wobei das Schneckenrad eine Drehachse aufweist,
eine Einstellungsmutter (4),
ein Aktuatorgehäuse (2), und
einen Schraubenabschnitt (21d), sodass die mit dieser zusammengesetzte Einstellungsmutter in die Richtung der Schraubachse (CL) des Schraubenabschnitts bewegbar ist; worin
die Einstellungsmutter einen sich von ihrer Außenoberfläche nach außen erstreckenden Fortsatz (43b) aufweist,
ein Anschlagabschnitt (53a) einer Oberfläche der Einstellungsmutter gegenüberliegt und sowohl die Einstellungsmutter als auch das Schneckenrad so angeordnet sind, dass der Fortsatz und der Anschlagabschnitt aneinander anstoßen können, um ein weiteres Gleiten der Einstellungsmutter entlang dem Schraubenabschnitt oder ein Abziehen dieser vom Schraubenabschnitt zu verhindern;
**dadurch gekennzeichnet, dass**
die Einstellungsmutter entlang der Richtung der Drehachse gleiten kann, sich aber nicht relativ entgegen der Drehung des Schneckenrads (5) drehen kann, dass
der Schraubenabschnitt (21d) am Aktuatorgehäuse (2) ausgebildet ist, und dass
der Anschlagabschnitt (53a) am Schneckenrad (5) ausgebildet ist.

2. Für elektrisch betriebene Spiegel verwendete Einstellungsvorrichtung nach Anspruch 1, worin
der Schraubenabschnitt an der Außenoberfläche einer am Aktuatorgehäuse (2) ausgebildeten Säule (21b) ausgebildet ist,
die Einstellungsmutter einen sich nach innen erstreckenden Vorsprung (43a) aufweist, der zum Schraubenabschnitt passt, und
der Anschlagabschnitt sich von einer Innenoberfläche des Schneckenrads nach innen erstreckt.

3. Für elektrisch betriebene Spiegel verwendete Einstellungsvorrichtung nach Anspruch 2, worin
der Fortsatz und der Anschlagabschnitt eine Anstoßgrenzfläche bilden, die an einem Teil der Oberfläche eines Konus liegt, der zu einer senkrecht zur Drehachse der Einstellungsmutter stehenden Ebene einen spitzen Winkel bildet.

## Revendications

1. Dispositif de réglage utilisé pour les rétroviseurs électriques comprenant :
une roue à vis sans fin (5) entraînée en rotation par un actionneur (6), la roue à vis sans fin ayant un axe de rotation,
un écrou de réglage (4),
un boîtier (2) d'actionneur, et
une partie de vis (21d), ledit écrou de réglage étant assemblé avec celle-ci afin d'être mobile dans la direction de l'axe de vis (CL) de ladite partie de vis, dans lequel :
ledit écrou de réglage a une saillie (43b) s'étendant vers l'extérieur à partir de sa surface externe,
une partie de butée (53a) fait face à une surface dudit écrou de réglage, et à la fois ledit écrou de réglage et ladite roue à vis sans fin sont agencés de sorte que ladite saillie et ladite partie de butée viennent en butée afin d'empêcher ledit écrou de réglage de continuer à glisser le long de la partie de vis et d'être retiré de ladite partie de vis ;
**caractérisé en ce que** :
l'écrou de réglage (4) peut coulisser le long de la direction dudit axe de rotation, mais ne peut pas tourner relativement contre la rotation de ladite roue à vis sans fin (5),
ladite partie de vis (21d) est formée sur le boîtier (2) d'actionneur, et
ladite partie de butée (53a) est formée sur la roue à vis sans fin (5).

2. Dispositif de réglage utilisé pour les rétroviseurs électriques selon la revendication 1, dans lequel :
ladite partie de vis est formée sur la surface externe d'une colonne (21b) formée sur ledit boîtier d'actionneur,
l'écrou de réglage a une saillie (43a) s'étendant vers l'intérieur qui s'adapte dans ladite partie de vis, et
ladite partie de butée s'étend vers l'intérieur à partir d'une surface interne de ladite roue à vis sans fin.

3. Dispositif de réglage utilisé pour les rétroviseurs électriques selon la revendication 2, dans lequel :
ladite saillie et ladite partie de butée forment une interface de butée qui se trouve sur une partie de la surface d'un cône qui forme un angle aigu par rapport à un plan normal par rapport à l'axe de rotation dudit écrou de réglage.
